Europäisches Patentamt

European Patent Office

Office européen des brevets

(11) Veröffentlichungsnummer: **0 352 448**
**A2**

## (12) EUROPÄISCHE PATENTANMELDUNG

(21) Anmeldenummer: 89110310.3

(22) Anmeldetag: 07.06.89

(51) Int. Cl.⁴: **F16F 15/30 , F16F 15/12**

(30) Priorität: 25.07.88 DE 3825258

(43) Veröffentlichungstag der Anmeldung:
**31.01.90 Patentblatt 90/05**

(84) Benannte Vertragsstaaten:
**DE ES FR GB IT**

(71) Anmelder: **WOCO Franz-Josef Wolf & Co.
Sprudelallee 19
D-6483 Bad Soden-Salmünster(DE)**

(72) Erfinder: **Wolf, Franz Josef
Sprudelallee 19
D-6483 Bad Soden-Salmünster(DE)**
Erfinder: **Pletsch, Hubert
Am Quellenrain 13
D-6483 Bad Soden-Salmünster(DE)**

(74) Vertreter: **Jaeger, Klaus, Dr. et al
Patentanwälte JAEGER, LORENZ & KOESTER
Pippinplatz 4a
D-8035 München-Gauting(DE)**

(54) **Drehschwingungsdämpfer.**

(57) Der Drehschwingungsdämpfer oder Tilger ist durch eine mit der Drehzahl stetig zunehmende Resonanzfrequenz und Versteifung der Federkennlinien des Gesamtsystems gekennzeichnet. Dies ist dadurch erreicht, daß der segmentierte Schwungmassenring innerhalb eines radial äußeren Tragringes oder Nabenringes angeordnet ist. Durch eine Lagerung der Schwungmassensegmentstücke auf Einzelfedern wird außerdem eine axiale und radiale Schwingfähigkeit des Drehschwingungsdämpfers hergestellt.

EP 0 352 448 A2

## Drehschwingungsdämpfer

Die Erfindung betrifft einen Drehschwingungsdämpfer der im Oberbegriff des Anspruchs 1 genannten Art.

Drehschwingungsdämpfer oder Tilger bestehen üblicherweise aus einem Trägerring und einem Schwungmassenring, die durch einen Federring begrenzt und federnd gegeneinander verdrehbar miteinander gekoppelt sind. Ein solches System zur Drehschwingungsdämpfung weist den Nachteil auf, nur innerhalb eines sehr schmalen Resonanzfrequenzbereiches die auf den Trägerring oder Nabenring einwirkenden Drehschwingungsstörungen wirksam zu dämpfen bzw. zu tilgen. Es sind daher bereits zahlreiche Versuche unternommen worden, Drehschwingungsdämpfer mit einem breiteren Arbeitsbereich zu entwerfen.

Im Rahmen dieser Bemühungen sind fliehkraftgeschaltete Drehschwingungsdämpfer bekannt geworden, bei dem zwischen einem inneren Nabenring und einem äußeren Schwungmassenring, die durch einen segmentierten Gummifederring miteinander verbunden sind, zusätzliche Schaltmassenstücke eingefügt sind. Diese Schaltmassenstücke werden unter Wirkung der bei rotierendem Tilger auftretenden Zentrifugalkraft mit der radial innenliegenden Wandfläche des äußeren Schwungmassenrings in Reibschluß gebracht und koppeln dadurch Zusatzfedern am Schwungmassenring an, über die die Schaltmassenstücke ihrerseits drehelastisch mit dem Nabenring verbunden sind. Durch dieses fliehkraftabhängige Zuschalten des zusätzlichen Federsystems kann der Drehschwingungsdämpfer fliehkraftgeschaltet mit einer zweiten Resonanzfrequenz versehen werden.

Abgesehen von Verschleißproblemen, die durch das Reibschlußschalten verursacht werden, kann mit einem solchen Drehschwingungsdämpfer jedoch lediglich eine zweite, ggf. auch eine dritte Resonanzfrequenz eingestellt werden. Eine kontinuierliche Verschiebung der Drehfederkennlinie des Drehschwingungsdämpfers als Funktion der Drehzahl kann durch einen solchen Drehschwingungsdämpfer jedoch prinzipiell nicht erreicht werden.

Aus dem nicht vorveröffentlichten Stand der Technik ist schließlich noch ein fliehkraftgeschalteter Drehschwingungsdämpfer bekannt, dessen Drehschwingungskennlinie eine stetige Funktion der Drehzahl ist. Dieser Drehschwingungsdämpfer ist als hülsenartige Gummimetallfeder dergestalt aufgebaut, daß die äußere Ringhülse als Trägerring zumindest prinzipiell starr mit der zu dämpfenden Welle verbunden ist, während ein innerer, zumindest zweigeteilter Hülsenring als Schwungmassenring ausgebildet ist. Der Trägerring und der Schwungmassenring sind durch eine Gummifeder federnd und begrenzt gegeneinander drehbeweglich miteinander verbunden bzw., als Schwingungssystem betrachtet, miteinander gekoppelt. Die ggf. auch segmentiert ausgebildete Gummifeder ist als Zylinderwandsegment ausgebildet, das die radial außenliegende Mantelfläche des jeweiligen Schwungsmassensegmentes vollflächig und flächenkomplementär mit der radial innenliegenden Innenwandfläche des Trägerringes verbindet.

Durch eine entsprechende Abstimmung der Größe der Schwungmasse und der Federkennzahlen der Gummifeder wird so ein leicht abstimmbarer Drehschwingungsdämpfer erhalten, der über einen weiten praktischen Nutzbarbeitsbereich eine Tilgerresonanzfrequenz zur Verfügung stellt, der in der angestrebten und erwünschten Weise eine stetige Funktion der Drehzahl der zu dämpfenden Welle ist.

Eine Eigenart dieses Systems ist seine große axiale und radiale Steifigkeit, die in der Praxis bereits als starres Verhalten gewertet werden kann.

Der Erfindung liegt die Aufgabe zugrunde, einen fliehkraftgeschalteten Drehschwingungsdämpfer zu schaffen, dessen Drehfederkennlinie eine stetige Funktion der Drehzahl der zu dämpfenden Welle ist, der jedoch zusätzlich, bezogen auf die Welle, auch axial und radial nutzbar schwingfähig ist, und bei dem überdies die Federkennlinien und die nutzbaren Arbeitsbereiche auf diesen Federkennlinien ohne großen Aufwand sowohl in Drehschwingungsrichtung als auch in der axialen und in der radialen Schwingungsrichtung anwendungsspezifisch festlegbar sind.

Gelöst wird diese Aufgabe erfindungsgemäß durch einen Drehschwingungsdämpfer, der die im kennzeichnenden Teil des Patentanspruchs 1 genannten erfindungswesentlichen Merkmale aufweist.

Der wesentliche Gedanke, der der Erfindung zugrundeliegt, ist zunächst also, das Schwungsmassensegmentstück des segmentierten Schwungsmassenringes nicht mehr über einen schalenartigen Gummipuffer, sondern, in Umfangsrichtung des Tilgers, über eine Folge einzelner, voneinander unabhängiger und dementsprechend auch voneinander unabhängiger abstimmbarer Federn prinzipiell dreidimensional beweglich auf dem Tragring abzustützen und die Schwungmassensegmente dadurch an diesen Tragring anzukoppeln. Durch eine von jedem Gummifachmann durch wenige Versuche ohne weiteres aufgrund seines Fachwissens für den jeweiligen Anwendungsfall spezifisch zu ermittelnde und festzulegende Profilierung und Dimensionierung der Federringsegmente des Federringes und der Schwungsmassensegmente des Schwungsmassenringes kann so ein Drehschwingungsdämpfer oder Tilger bereitgestellt werden, der in einem weiten Drehzahlbereich und Störschwingungsfrequenzbereich mit lateraler Hauptschwingungsrichtung nicht nur Drehschwingungen, sondern auch radiale und axiale Störschwingungen, die auf die zu dämpfende Welle einwirken, drehzahlabhängig zu dämpfen oder zu tilgen vermag. So können bei einer Welle also nicht nur beispielsweise antriebsbedingte Drehschwingungen, sondern auch ein entweder systembedingtes oder ein abnutzungsbedingtes axiales und/oder radiales Schlagen der Welle so wirkungsvoll gedämpft und getilgt werden, daß die Welle und damit das Gesamtsystem, in dem die Welle läuft, ein überraschend ruhiges Lauf-und Schwingungsverhalten zeigen, das vom klassischen Drehdrehschwingungsdämpfern nicht bewirkt werden kann.

Der Drehschwingungsdämpfer gemäß der Erfindung wird daher mit diesen Eigenschaften vorzugsweise überall dort eingesetzt, wo Wellen von Verbrennungsmotoren oder gepulsten Antrieben beaufschlagt sind. Motorisch angetriebene Arbeitsgeräte und Werkzeuge gehören damit zum bevorzugten Einsatzbereich des Drehschwingungsdämpfers gemäß der Erfindung ebenso wie der gesamte Bereich des Kraftfahrzbaus.

Ausgestaltungen der Erfindung sind Gegenstand der Unteransprüche.

So sind insbesondere die Schwungmassensegmenten vorzugsweise als Zylindermantelsegmente so ausgebildet, daß deren radial außenliegende Fläche der radial innenliegenden Fläche des Tragringes oder Nabenringes des Drehschwingungsdämpfers flächenkomplementär und konzentrisch mit Abstand frei gegenüberliegt. Dabei ist die Ausdrucksweise "frei gegenüberliegt" so zu verstehen, daß die Schwungmassensegmente lediglich durch die Federsegmente auf dem umgebenden Tragring abgestützt sind und bei Einwirkung von Zentrifugalkräften unter Kompression der sie auf dem Trägerring abstützenden Federn in Richtung auf den Tragring zu verschiebbar sind, ohne irgendwelche Rückschlüsse herstellen zu müssen.

Die so ausgebildeten Schwungmassensegmente sind dabei vorzugsweise durch stegartige verlaufende Federsegmente des Federringges getragen, die an den axialen Randabschnitten des Schwungmassensegmentes angreifen. Dabei sind diese axial verlaufenden Federstege durch Profilieren, Dimensionieren und/oder durch ein entsprechendes Einstellen der Härte des verwendeten Elastomers, unter Vorgabe der Erfordernisse des jeweiligen Anwendungsfalls ohne weiteres so abstimmbar, daß der Drehschwingungsdämpfer auf vorgegebene Federkennlinien nicht nur in Drehrichtung, sondern auch in radialer und insbesondere axialer Richtung eingestellt werden kann.

Insbesondere bei einer solchen Ausgestaltung des Drehschwingungsdämpfers gemäß der Erfindung sind die einzelnen Einflußgrößen und ist insbesondere der Abstand zwischen der radialen Außenfläche des Schwungmassensegmentes und der Innenfläche des Tragringes so bemessen, daß bei der für den jeweils beabsichtigten Einsatz des Drehschwingungsdämpfers größten zulässigen Drehzahl die beiden genannten Flächen einander gerade noch nicht oder mit nur vernachlässigbar kleinem Reibmoment berühren. Zweckmäßigerweise ist dabei die Innenzylinderfläche des Tragringes zu Dämpfungszwecken vergleichsweise dünn gummiert, um ein Schlagen der metallischen Schwungmassensegmente auf dem in der Regel ebenfalls metallischen Tragring auszuschließen.

Darüber hinaus sind solche Dämpfungsgummierungen überall dort angezeigt, wo die einzelnen Teile des Drehschwingungsdämpfers anschlagartig oder auch nur schleifend gegeneinander arbeiten können. Zu einer Veränderung der Federkennlinien sollen solche Dämpfungsbeschichtungen nicht beitragen.

Dem Gummifachmann bzw. dem Schwingungstechniker als Fachmann ist weiterhin ohne weitere ersichtlich, daß die Federn des Federringes nicht zwingend als nur eine einzige konstruktiv homogene Druckfeder, beispielsweise und insbesondere Gummifeder, ausgebildet zu sein braucht. Vielmehr können diese einzelnen Federn ohne weiteres auch zu einem System kombinierte Federn sein. So kann beispielsweise durch die Kombination einer pufferartigen tragenden Gummifeder und einer Knickfeder, beispielsweise einem axial stehenden zylindrischen Schlauchabschnitt, eine Kennlinie für die die Schwungmassensegmente abstützenden Federn hergestellt werden, in der die Federkennlinien der Federn bis zu einem vorgegebenen Grenzdrehzahlbereich, meist einem Leerlaufdrehzahlbereich, vergleichsweise steil ansteigen, um dann in einen weicheren, stetig progressiven Kennlinienbereich, den eigentlichen Arbeitsbereich, überzugehen.

Eine weitere Modifizierung und freie, anwendungsorientierte Einstellung des Schwingungsverhaltens des Drehschwingungsdämpfers gemäß der Erfindung kann schließlich dadurch bewirkt werden, daß die von Haus aus voneinander isolierten Schwungmassensegmente des Drehschwingungsdämpfers durch ein der Zentrifugalkraft entgegenwirkendes Federsystem untereinander schwingungsgekoppelt sind. Dabei kann dieses Zusatzfedersystem die Schwungmassensegmente sowohl paarweise als auch nach anderen Mustern koppeln. Das Spektrum der bedarfsweise vorzunehmenden Kupplungsmuster reicht also vom Koppeln zweier einander diametral gegenüberliegenden Schwungmassensegmente mit im übrigen ungekoppelten Schwungmassensegmenten im Drehschwingungsdämpfer bis hin zur Einbindung sämtlicher Schwungmassensegmente des Dämpfers in ein der Zentrifugalkraft entgegenwirkendes Federsystem. Dieses Zusatzfedersystem wird dabei aus konstruktiven Gründen meistens und vorzugsweise eine oder eine Kombination von Spiralzugfedern aus Stahl sein.

Die Erfindung ist im folgenden anhand von Ausführungsbeispielen in Verbindung mit den Zeichnungen näher erläutert.

Es zeigen:

Fig. 1 in Draufsicht in axialer Richtung ein erstes Ausführungsbeispiel des Drehschwingungsdämpfers;

Fig. 2 in gleicher Sicht wie Fig. 1 ein zweites Ausführungsbeispiel des Drehschwingungsdämpfers;

Fig. 3 als drittes Ausführungsbeispiel des Drehschwingungsdämpfers eine Variante des in Fig. 2 gezeigten Dämpfers, bei dem sämtliche Schwungmassensegmente durch ein Zusatzfedersystem untereinander gekoppelt sind; und

Fig. 4 ein Beispiel für die Verbindung zwischen einer Zusatzfeder der in den Figuren 2 und 3 gezeigten Art mit einem Schwungmassensegment.

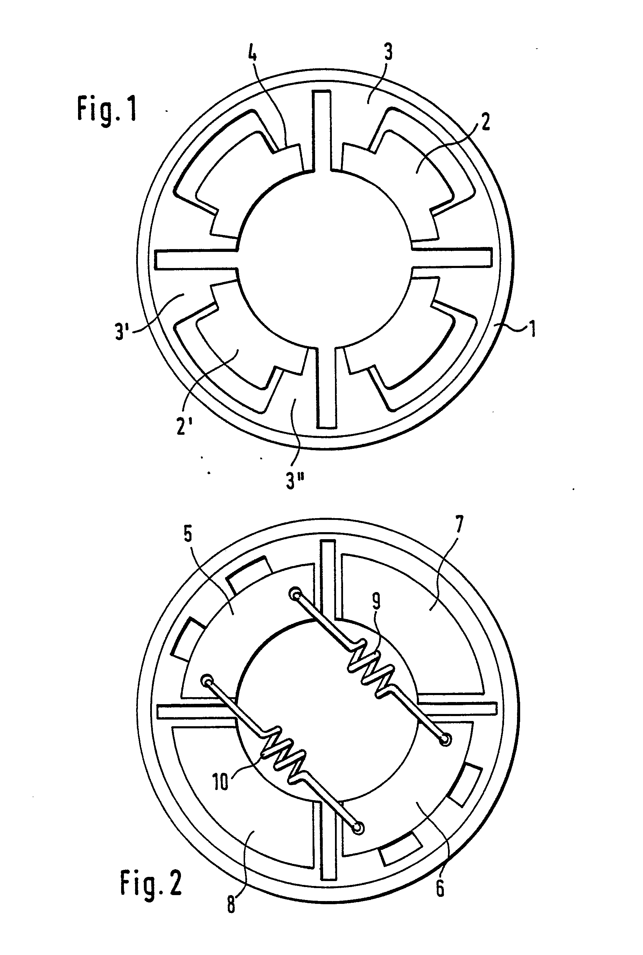

Bei dem in Fig. 1 in axialer Draufsicht dargestellten Drehschwingungsdämpfer handelt es sich um eine vereinfacht dargestellte Grundversion des Dämpfers gemäß der Erfindung. Der dargestellte Dämpfer besteht aus einem äußeren Tragring 1, einem radial innenliegenden segmentierten Schwungmassenring 2 und einem beide Ringe miteinander koppelnd verbindenden, ebenfalls segmentierten Federring 3. Dieser Federring 3 besteht bei der in Fig. 1 gezeigten Ausbildung aus einer Folge von acht Einzelfedern aus Gummi, die entlang der axialen Längskanten über Schulterleisten 4 die vier Schwungmassensegmente 2 gegen die Innenfläche des Tragringes 1 abstützen.

Selbstverständlich ist dabei, daß der Ring so dimensioniert ist, daß ihn die ausschließlich am Tragring 1 angeflanschte Welle im Bedarfsfall zentral frei durchsetzen kann.

Dadurch, daß die Schwungmassensegmente 2 nicht mehr in starre pufferartige Gummischalen eingebettet sind, sondern lediglich über flexible Stege 3 an den Tragring 1 angebunden sind, vermag das in Fig. 1 gezeigte System auch radial und insbesondere axial zu schwingen. Dabei verschieben sich die Kennlinien des Federsystems mit zunehmender Drehzahl zu einem steileren Verlauf.

Bei dem in Fig. 2 gezeigten Ausführungsbeispiel ist die Vielfalt der möglichen Ausgestaltungen des Drehschwingungsdämpfers gemäß der Erfindung angedeutet. So weist der in Fig. 2 gezeigte Drehschwingungsdämpfer neben den beiden miteinander gekoppelten Schwungmassensegmenten 5,6 auch ein Schwungsegmentpaar 7,8 auf, das in der aus dem nicht vorveröffentlichten Stand der Technik bekannten Weise auf pufferartigen zylinderschalenförmigen Elastomerkissen gelagert und abgestützt ist. Die beiden nach den Prinzipien der vorliegenden Erfindung gelagerten Schwungmassensegmente 5,6 sind dabei durch zwei Spiralzugfedern 9, 10 miteinander verbunden. Während die beiden Schwungmassenstücke 7,8 also mit ihrem Beitrag zu Federkennlinie des Gesamtsystems mit einer stetig progressiv ansteigenden Komponente der Federversteifung des Gesamtsystems beitragen, wirken die verbundenen Schwungmassensegmente 5,6 erst bei vergleichsweise sehr hohen Drehzahlen zusätzlich kennlinienversteifend. Insgesamt kann mit einem Drehschwingungs dämpfer der in Fig. 2 gezeigten Art also der nutzbare Arbeitsbereich des Dämpfers wesentlich verbreitert werden.

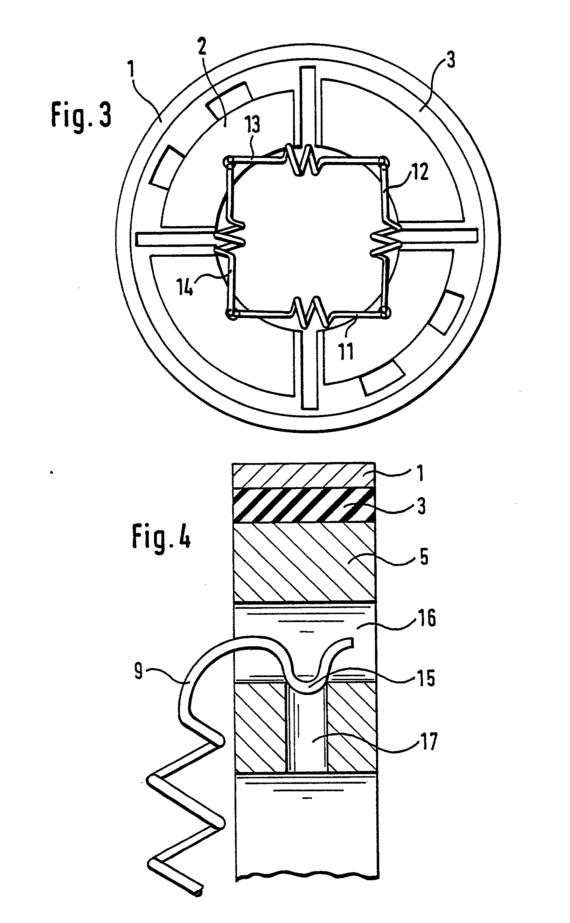

Bei dem in Fig. 3 gezeigten Ausführungsbeispiel sind die Schwungmassensegmente und die sie lagernden Federn ebenso wie bei dem vorstehend im Zusammenhang mit der Fig. 2 erläuterten Ausführungsbeispiel ausgebildet, wobei jedoch die gemäß der Erfindung gelagerten Schwungmassensegmente nicht nur auf zwei, sondern auf drei Axialfederstegen gelagert und über diese an den Tragring angekoppelt sind. Im Gegensatz zu dem in Fig. 2 gezeigten Ausführungsbeispiel sind bei dem in Fig. 3 gezeigten Beispiel jedoch alle vier Schwungmassensegmente des Dämpfers untereinander zu einem System verkoppelt. Dabei wird die Kopplung in dem gezeigten Ausführungsbeispiel wiederum durch Spiralzugfedern 11,12,13,14 aus Federstahl bewirkt. Im Ergebnis zeigt der in Fig. 3 dargestellte Drehschwingungsdämpfer eine sehr viel mäßigere Rate der Federversteifung des Gesamtsystems als Funktion der Drehzahl als dies für den in Fig. 2 gezeigten Drehschwingungsdämpfer der Fall ist, bei dem zwei der insgesamt vier Schwungmassensegmente unmittelbar und unkorrigiert bei relativ großer Masse fliehkraftwirksam sind.

Sowohl bei dem in Fig. 2 als auch bei dem in Fig. 3 gezeigten Ausführungsbeispiel sind die Zusatzfedern 9,10, 11,12,13,14 insgesamt so angeordnet, daß sie wiederum eine den Drehschwingungsdämpfer ggf. durchsetzende Welle nicht berühren.

Bei der ergänzenden Verkopplung einzelner oder aller Schwungmassensegmente untereinander durch Zusatzfedern, die der Zentrifugalkraft entgegenwirken, ist die Art und Weise der Ankopplung wegen der relativ hohen dynamischen Belastungen für einen sicheren dauerhaften Betrieb von relativ großer Bedeutung. Ein Ausführungsbeispiel für eine solche mechani sche Verbindung zwischen einer der Zusatzfedern 9 und einem Schwungmassensegment 5 ist in der Fig. 4 vergrößert dargestellt.

Zum Einhängen der Feder 9 über eine an deren Ende ausgebildeten Schlaufe 15 ist das Schwungmassensegment 5 mit einer axialen Bohrung 16 und einer radialen Bohrung 17 versehen, die sich in die radiale Bohrung 16 öffnet. Die axiale Bohrung 16 hat einen solchen Durchmesser, daß das Ende der Spiralzugfeder 9 mit der Einhängschlaufe 15 bequem in die Bohrung 16 eingeführt werden kann. Der Durchmesser der Bohrung 17 ist so auf den Krümmungsradius der Schlaufe 15 abgestimmt, daß diese Feder 9 unter Bildung einer gelenkigen Ankopplung in die Mündung der Radialbohrung 17 einrasten kann.

Bei dieser Art der Anlenkung der Zusatzfeder 9 am Schwungmassensegment 5 wird ein hohes Maß an dynamischer Anpassungsfähigkeit und damit Zuverlässigkeit der Ankopplung selbst bei minimalem zusätzlichen Montage- und Demontageaufwand für die Zugfeder erreicht.

Die der vorliegenden Beschreibung beigefügte Zusammenfassung ist Bestandteil der ursprünglichen Offenbarung der Erfindung.

## Ansprüche

1. Drehschwingungsdämpfer mit drehzahlabhängiger Federkennlinie, bestehend aus einem radial außenliegenden Tragring ( 1 ), einem radial innenliegenden segmentierten Schwungmassenring ( 2 ) und einem beide Ringe miteinander koppelnd verbindenden ebenfalls segmentierten Federring ( 3 ),
dadurch **gekennzeichnet,**
daß der Federring ( 3 ) in Umfangsrichtung in eine Folge einzelner, voneinander unabhängiger und voneinander unabhängig abstimmbarer Federn aufgelöst ist, von denen jeweils eine, vorzugsweise mindestens zwei ($3', 3''$), jeweils ein Schwungmassensegment ($2'$) auf dem Tragring (1) abstützen.

2. Drehschwingungsdämpfer nach Anspruch 1,
dadurch **gekennzeichnet,**
daß die Schwungmassensegmente ( 2 ) Zylindermantelsegmente sind, deren radial außenliegende Fläche der Innenfläche des Tragringes ( 1 ) flächenkomplementär und konzentrisch mit Abstand frei gegenüberliegt, und die an ihren radial innenliegenden axial verlaufenden Kanten oder als Träger ( 4 ) ausgebildeten Randabschnitten angreifend über die Federn ($2', 2''$) des Federringes auf der Innenfläche des Tragringes ( 1 ) abgestützt sind.

3. Drehschwingungsdämpfer nach Anspruch 2,
dadurch **gekennzeichnet,**
daß der Abstand zwischen der radialen Außenfläche des Schwungmassensegmentes ( 2 ) und der Innenfläche des Tragringes ( 1 ) so bemessen ist, daß bei der für den jeweils beabsichtigten Einsatz des Drehschwingungsdämpfers größten zulässigen Drehzahl die beiden Flächen einander gerade noch nicht oder nur vernachlässigbar berühren.

4. Drehschwingungsdämpfer nach einem der Ansprüche 1 bis 3,
dadurch **gekennzeichnet,**
daß die Innenzylinderfläche Tragringes ( 1 ) zu Dämpfungszwecken dünn gummiert ist.

5. Drehschwingungsdämpfer nach einem der Ansprüche 1 bis 4,
dadurch **gekennzeichnet,**
daß die Federn des Federringes axial ausgerichtete Gummifederstege ($3', 3''$) sind, die den jeweiligen Abstimmerfordernissen entsprechend profiliert und/oder unterbrochen ausgebildet sind.

6. Drehschwingungsdämpfer nach Anspruch 5,
dadurch **gekennzeichnet,**
daß die Schwungmassensegmente ( 2 ) zumindest auf den Oberflächenbereichen , mit denen sie einander benachbart gegenüberliegen, dämpfend gummiert sind.

7. Drehschwingungsdämpfer nach einem der Ansprüche 1 bis 6,
dadurch **gekennzeichnet,**
daß der Dämpfer mit einer geraden Anzahl von Schwungmassensegmenten ( 2 ), notwendigerweise also mindestens zwei und sinnvollerweise nicht mehr als acht oder zehn, ausgerüstet ist, wobei die jeweils einander diametral gegenüberliegend federnd gelagerten Schwungmassensegmente hinsichtlich ihrer Resonanzfrequenzen so aufeinander abgestimmt sind, daß die Resonanzfrequenzen in jeder der drei Hauptschwingungsrichtungen torsional, radial, axial jeweils paarweise gleich sind, wobei sie jedoch je nach Anwendungsspezifikation zweckmäßigerweise von Hauptschwingungsrichtung zu Hauptschwingungsrichtung voneinander verschieden ausgelegt sein können.

8. Drehschwingungsdämpfer nach einem der Ansprüche 1 bis 7,
dadurch **gekennzeichnet,**
daß die Federn ( 3 ) in an sich prinzipiell bekannter Weise durch Kopplung von Einzelfedern zu einem Federsystem mit einer nichtstetigen Kennlinie ausgestattet sind.

9. Drehschwingungsdämpfer nach Anspruch 8,
dadurch **gekennzeichnet,**
daß die Federkennlinien der Federn bis zu einem vorgegebenen Grenzdrehzahlbereich, meist einem Leerlaufdrehzahlbereich, vergleichsweise steil ansteigen, um dann in einen weicheren, progressiven Kennlinienbereich überzugehen.

10. Drehschwingungsdämpfer nach einem der Ansprüche 1 bis 9,
dadurch **gekennzeichnet,**
daß zumindest ein Teil der einander jeweils diame-

tral gegenüberliegenden Schwungmassensegment-paare (5,6) durch ein der Zentrifugalkraft entgegenwirkendes Federsystem (9,10) untereinander gekoppelt sind.

11. Drehschwingungsdämpfer nach Anspruch 10,
dadurch **gekennzeichnet,**
daß zumindest ein Teil der Schwungmassensegmentpaare paarweise und von Paar zu Paar unabhängig voneinander gekoppelt sind.

12. Drehschwingungsdämpfer nach einem der Ansprüche 1 bis 11,
dadurch **gekennzeichnet,**
daß alle Schwungmassensegmente des Dreh-schwingungsdämpfers untereinander durch ein Zu-satzfedersystem (11, 12,13,14), das der Zentrifugal-kraft entgegenwirkt, gekoppelt sind.

Fig.1

Fig.2

Fig. 3

Fig. 4